# FASCICULE DE BREVET EUROPEEN

(11) **EP 3 408 944 B1**
(45) Date de publication et mention de la délivrance du brevet: **15.04.2020**
(21) Numéro de dépôt: 17701546.8
(22) Date de dépôt: 27.01.2017
(51) Int. Cl.: H04B 7/04, H04B 7/10, H04B 7/00

(54) **RÉCEPTEUR DE COMMUNICATION RADIO ANNULANT LA POLARISATION CROISÉE D'UN SIGNAL REÇU**
FUNKKOMMUNIKATIONSEMPFÄNGER ZUR UNTERDRÜCKUNG DER KREUZPOLARISATION EINES EMPFANGENEN SIGNALS
RADIO COMMUNICATION RECEIVER CANCELLING THE CROSS POLARIZATION OF A RECEIVED SIGNAL

(30) Priorité: 27.01.2016 FR 1650651
(43) Date de publication de la demande: 05.12.2018
(73) Titulaire: Zodiac Data Systems, 91978 Courtaboeuf Cedex (FR); Centre National d'Etudes Spatiales, 75001 Paris (FR)
(72) Inventeur: PASTERNAK, Nicolas, 92260 Fontenay Aux Roses (FR); THOMAS, Alain, 92140 Clamart (FR); DUDAL, Clément, 31000 Toulouse (FR); LLAURO, Mathieu, 91140 Villebon Sur Yvette (FR); MILLERIOUX, Jean-Pierre, 31400 Toulouse (FR)
(74) Mandataire: Regimbeau
(86) Numéro de dépôt international: PCT/EP2017/051861
(87) Numéro de publication internationale: WO 2017/129799

(56) Documents cités:
- EP-A1- 1 940 061
- EP-A1- 2 560 306
- EP-A2- 0 307 950
- FR-A1- 2 774 831
- FR-A1- 2 809 902
- US-A1- 2010 158 161

## Description

### DOMAINE TECHNIQUE GENERAL

L'invention concerne un récepteur numérique et notamment un récepteur configuré pour annuler l'interférence due à la polarisation croisée d'un signal comprenant deux polarisations orthogonales.

### ETAT DE LA TECHNIQUE

Dans le cadre des communications radios, l'encombrement du spectre fréquentiel est tel que pour optimiser la ressource spectrale on transmet les signaux radios dans deux polarisations orthogonales. Ceci est particulièrement vrai pour des communications directives rencontrant peu d'obstacles, comme les communications par satellite ou les faisceaux terrestres. De cette façon, la capacité spectrale est doublée.

Un problème est que les performances d'isolation entre polarisations des antennes de réception et d'émission ainsi que la propagation atmosphérique créent une interférence entre les polarisations croisées.

En général, on peut démoduler les signaux issus des deux sorties approximativement orthogonales de l'antenne, mais l'interférence dégrade le taux d'erreur bits en réception.

Cet effet est le plus important pour des dispositifs de communication (par exemple des satellites) qui utilisent des porteuses à même débit dans les deux polarisations (par exemple pour la télémesure haut-débit des satellites d'observation de la Terre en orbite basse).

L'utilisation d'antennes à double polarisation iso-flux à bord des satellites défilants (c'est-à-dire dont le diagramme varie avec l'élévation du satellite vue de la station lors d'un passage pour fournir un flux constant au sol) ou d'antennes à double polarisation de large ouverture augmente l'interférence due à la polarisation croisée par rapport à l'utilisation d'antennes bord d'ouverture étroite et pointant la station de réception qui présentent une meilleure performance de cross-polarisation.

Les solutions connues au problème de séparation des polarisations consistent en un dispositif autonome placé en amont des récepteurs, c'est-à-dire des fonctions de synchronisation, de démodulation et décodage.

Un tel dispositif recherche les meilleures combinaisons des deux signaux de l'antenne en minimisant un critère appliqué aux formes d'ondes extraites à sa sortie, sans utiliser de donnée issue du récepteur en aval (par exemple, critère de type CMA (en anglais, « *Constant Modulus Algorithm* »), qui minimise la variation d'enveloppe complexe du signal extrait).

Toutefois, ces techniques fonctionnent moins bien avec des modulations à enveloppe variable telles que les modulations filtrées, les constellations présentant des symboles d'énergies différentes ou les communications par salves (en anglais « *bursts* »). En particulier, ces schémas ne permettent pas des traitements d'égalisation conjoints.

Des solutions connues comme celle décrite dans EP1940061A1 nécessitent une récupération de phase porteuse avant annulation ou démodulation, ce qui n'est pas possible avec des modulations reçues à très faible rapport signal à bruit, comme celles utilisant des codages puissants (turbo codes ou LDPC) pour fonctionner à la limite de la capacité de Shannon, ou en présence d'une importante interférence de polarisation croisée. D'autres comme EP2560306A1 ou EP307950A2 se proposent d'améliorer le traitement de l'interférence par un filtre transverse en y adjoignant un système de réalignement temporel de la polarisation secondaire sur la principale, ce qui complexifie le dispositif. Ces dispositifs estiment des critères d'erreur à partir de variations avec des symboles antérieurs où le rapport signal sur bruit ou signal sur interférence est faible et ne permet donc pas l'égalisation sur des formes d'ondes prévues pour fonctionner proche de la limite de Shannon.

D'autres solutions connues proposent de traiter indépendamment chacune des polarisations afin de supprimer la polarisation croisée. A ce titre, on pourra se référer au document US 4 575 862.

Ainsi, les solutions connues sont complexes et nécessitent des traitements amont et ne s'appliquent pas à tous les cas de communication.

### PRESENTATION DE L'INVENTION

L'invention propose de pallier l'ensemble de ces inconvénients en proposant un dispositif permettant à la fois la possibilité d'effectuer de l'égalisation conjointe à l'annulation, une synchronisation en phase de la porteuse effectuée après annulation de l'interférence que ce soit dans un mode de démodulation aveugle ou aidée (bursts) et un réalignement temporel des polarisations principales et secondaires.

A cet effet, l'invention propose un récepteur de communication radio recevant un signal radio comprenant une polarisation principale et une polarisation secondaire orthogonale à la polarisation principale selon la revendication 1.

L'invention est avantageusement complétée par les caractéristiques suivantes, prises seules ou en une quelconque de leur combinaison techniquement possible :
- l'unité d'annulation de la polarisation secondaire comprend une unité de filtrage du signal reçu, le signal filtré en sortie ne comprenant uniquement que la contribution de la polarisation principale ;
- l'unité d'annulation de la polarisation secondaire comprend une unité d'estimation
   du filtre destiné à supprimer du signal reçu l'interférence due à la polarisation secondaire;
- le récepteur comprend une unité de démodulation du signal filtré configurée pour extraire du signal filtré des symboles souples après filtrage, le filtre idéal étant le filtre adapté qui maximise le rapport signal à bruit pour un canal AWGN, ce filtre pouvant être combiné à un filtre secondaire d'égalisation du canal. Le récepteur fournit une information d'erreur fréquentielle ou de phase porteuse et une autre de rythme symbole qui sont renvoyées à l'unité de synchronisation.
- le récepteur comprend en outre un décodeur configuré pour décoder les symboles souples ;
- à un instant donné, le filtre est estimé à partir du signal filtré à l'instant précédent ;
- le filtre est estimé à partir des symboles souples ;
- le filtre est estimé à partir des informations extrinsèques ou des symboles souples après décodage ;
- le filtre, est estimé à partir du signal après filtre adapté en prenant comme critère d'erreur une distance à un pattern attendu tel que par exemple une enveloppe constante ou une constellation ;
- le filtre est estimé en tenant compte également des corrections amenées par le filtre secondaire d'égalisation.

L'invention permet de réduire l'interférence entre les polarisations qui utilise en entrée les deux polarisations préalablement synchronisées sur le rythme et la fréquence porteuse de tout ou partie du signal dans la polarisation d'intérêt.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- Les figures 1a, 1b et 1c illustrent un récepteur conforme à l'invention ;
- La figure 2 illustre un schéma détaillé de l'unité de filtrage de l'unité d'annulation de la polarisation secondaire du récepteur de la figure 1 ;
- La figure 3 illustre schématiquement une implémentation possible de l'unité d'annulation de l'interférence ;
- La figure 4 illustre une implémentation possible d'une unité de démodulation assistée par pilote d'un récepteur selon l'invention.

### DESCRIPTION DETAILLEE DE L'INVENTION

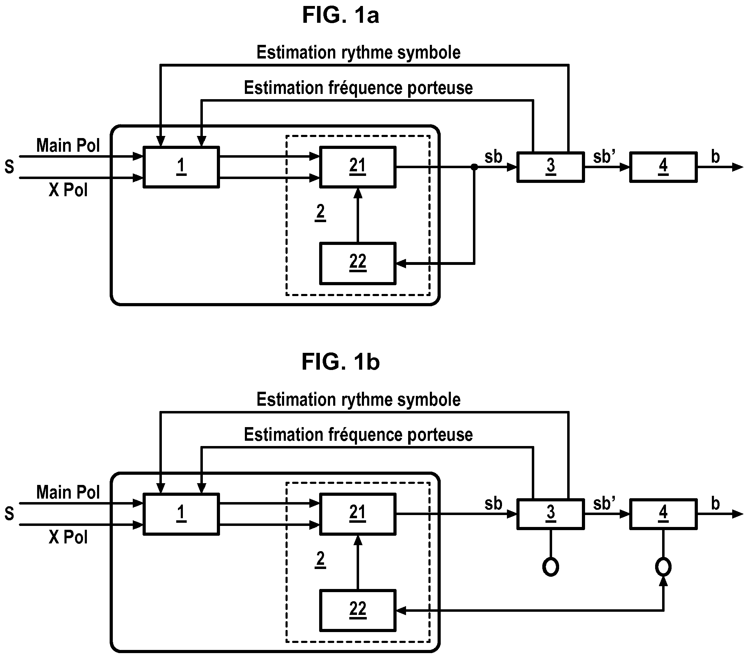

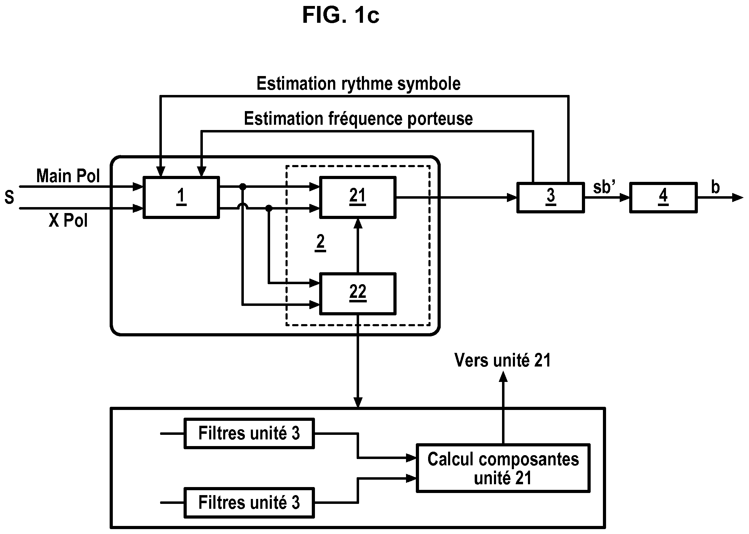

Les **figures 1a, 1b****,** **1c** illustrent, un récepteur de communication radio recevant en entrée un signal radio, provenant d'un satellite par exemple.

Ce signal reçu S comprend une polarisation principale MAIN-POL et une polarisation secondaire X-POL orthogonale à la polarisation principale MAIN-POL.

On considère que la polarisation d'intérêt est la polarisation principale MAIN-POL.

Le récepteur comprend :
- une unité 1 de réception des deux polarisations du signal reçu qui est synchronisée en fréquence porteuse sur la polarisation principal MAIN-POL;
- une unité 2 d'annulation de la polarisation secondaire aussi synchronisée sur la polarisation principale MAIN-POL ;
- une unité 3 de démodulation qui permet notamment de communiquer par rétroaction à l'unité 1 de réception des informations fréquentielles et éventuellement de rythme symbole ;
- une unité 4 de décodage.

On décrit dans ce qui suit chaque élément constituant le récepteur.

### Unité 1 de réception

L'unité 1 de réception reçoit le signal comprenant les deux polarisations MAIN-POL, X-POL lesquelles sont communiquées à l'unité 2 d'annulation de la polarisation secondaire, aussi synchronisée sur la polarisation principale MAIN-POL.

La particularité de l'unité 1 de réception est qu'elle synchronise les deux polarisations sur la polarisation principale MAIN-POL en fréquence porteuse et en rythme symbole, à partir des informations fournies par une unité 3 de démodulation en aval de l'unité d'annulation (l'unité 3 de démodulation sera décrite en détail ci-après).

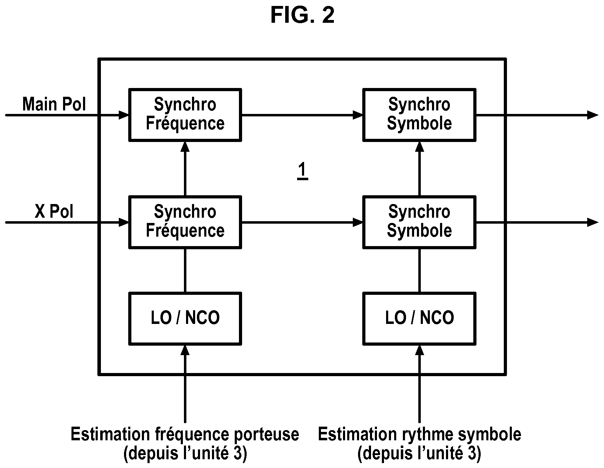

La **figure 2** illustre de manière détaillée les traitements effectués par l'unité 1 de réception. En particulier, les informations d'erreur fréquentielle et de rythme symbole calculées dans les étages en aval de l'unité 2 d'annulation de la polarisation secondaire (par une unité 3 de démodulation fonctionnant en mode « tramé », c'est-à-dire s'appuyant sur la détection d'une entête, sinon en mode « classique » grâce à un système de récupération de phase de type PLL, ou bien encore en mode « turbo » faisant appel à une unité 4 de décodage pour créer une rétroaction utilisant les valeurs extrinsèques) permettent :
- de ramener, par l'intermédiaire d'un oscillateur local LO/NCO le signal MAIN-POL en bande de base et d'asservir X-POL sur cette même information ;
- d'échantillonner les signaux MAIN-POL et X-POL à un rythme multiple du rythme symbole de MAIN-POL et à l'instant optimal.

### Unité 2 d'annulation de la polarisation secondaire

L'unité 2 d'annulation de la polarisation secondaire, aussi synchronisée sur la polarisation principale MAIN-POL permet de supprimer du signal reçu S l'interférence due à la polarisation secondaire X-POL.

En particulier, l'unité 2 d'annulation de la polarisation secondaire comprend une unité 21 de filtrage des composantes principale MAIN-POL et secondaire X-POL du signal reçu S à partir de filtres estimés par une unité 22 d'estimation des filtres destinés à supprimer du signal reçu, le signal destiné à la polarisation secondaire X-POL.

L'unité 2 d'annulation de la polarisation secondaire comprend ainsi une unité 21 de filtrage recevant en entrée le signal reçu S comprenant la polarisation principale MAIN-POL et la polarisation secondaire X-POL afin de :
- filtrer les composantes en phase de la polarisation secondaire contribuant à l'interférence de la polarisation principale, pour ses composantes en phase et en quadrature ;
- filtrer les composantes en quadrature de la polarisation secondaire contribuant à l'interférence de la polarisation principale, pour ses composantes en phase et quadrature ;
- additionner ces composantes ainsi filtrées aux composantes en phase et en quadrature de la polarisation principale de manière à ce que le signal filtré issu de l'unité 21 de filtrage efface la contribution de la polarisation secondaire sur la polarisation principale.

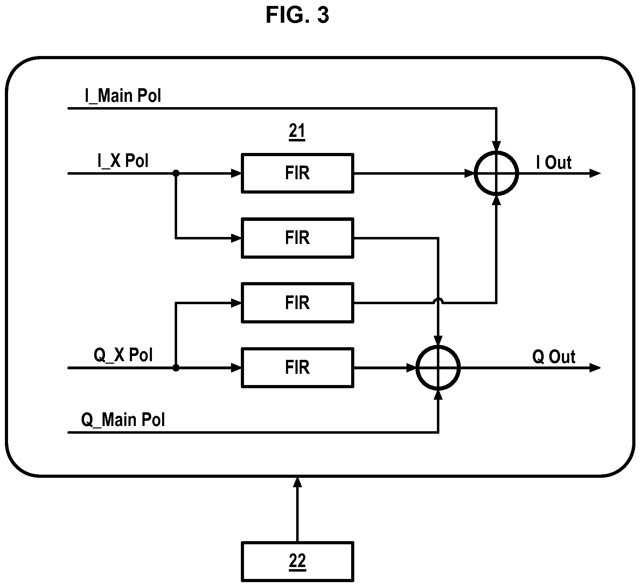

En relation avec la **figure 3****,** l'unité de filtrage 21 est constituée d'un jeu de filtres numériques à réponse impulsionnelle finie (en anglais, « *Finite Impulse Response* » (FIR)) réels à une dimension (un flux d'échantillons réels en entrée et un flux d'échantillons réels en sortie).

On peut disposer quatre filtres FIR comme illustré sur la figure 3, pour la contribution de chaque entrée en phase I ou en quadrature Q sur chaque sortie en phase ou en quadrature. Dans une implémentation simplifiée, l'ensemble équivaut à un filtre FIR complexe qui agit sur un signal d'enveloppe complexe I + jQ. Dans ce cas, le filtre conserve toute rotation de phase de l'entrée à la sortie et les filtres réels le composant vérifient que la fonction de transfert de I→I est identique à celle de Q→Q et que celle de I→Q est opposée à celle de Q→I.

La structure du groupe de filtres 21 proposée permet :
- d'assurer la compensation temporelle (comme une différence de retard) entre la polarisation principale et la polarisation secondaire ;
- de conserver les rotations de phase des signaux en bande de base pour permettre la démodulation cohérente en aval de l'annulation de l'interférence et être insensible à l'erreur de phase porteuse.

Les composantes en phase I_X-POL et en quadrature Q_X-POL de la polarisation secondaire X-POL sont filtrées par de tels filtres FIR de façon à reformer l'opposé des contributions de l'interférence X-POL présentes sur chacune des composantes en phase et en quadrature de Main-POL. L'addition à ces composantes de la polarisation principale fournit alors les composantes en phase Iout et quadrature Qout ne comprenant plus que la contribution de la polarisation principale MAIN-POL.

Ainsi, en sortie de l'unité 21 de filtrage, on a des symboles bruts sb entachés de bruit et de distorsions de canal mais exempts d'interférence de polarisation croisée X-POL.

L'unité 22 d'estimation des filtres va déterminer les filtres qui vont permettre de supprimer la contribution de la polarisation secondaire X-POL. Pour cela il minimise la distance ou maximise la vraisemblance entre une séquence de ces symboles et son profil attendu.

### Unité 3 de démodulation

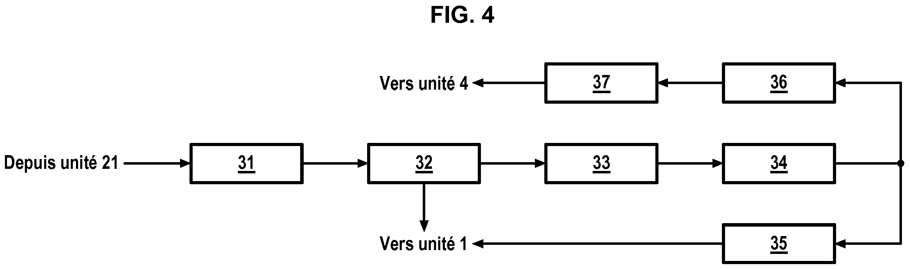

La **figure 4** illustre de manière détaillée une implémentation possible d'une unité 3 de démodulation en mode tramé ou assisté par pilotes afin d'illustrer les interactions possibles avec l'unité de calcul de l'annulation d'interférence (unité 22) et avec l'unité 1 de synchronisation.

En relation avec la figure 4, l'unité 3 de démodulation comprend :
- un filtre adapté 31 maximise le rapport signal sur bruit du signal expurgé de l'interférence de polarisation permettant en amont des estimations au maximum de vraisemblance ;
- un bloc 32 d'estimation du rythme et phase symbole à destination de l'unité 1;
- un bloc 33 d'égalisation canal à titre d'exemple d'égalisation conjointe avec l'égalisation de l'annulation de l'interférence de polarisation, l'égalisation canal désignant tout défaut du canal de transmission autre que l'interférence de polarisation (inter symbole, distorsion de modulations, de filtres analogiques etc.) ;
- un 34 corrélateur de détection de pilotes (pattern connu) ;
- Un bloc 35 d'estimation d'offset de fréquence porteuse (qui pourra se faire sur les pilotes) à destination de l'unité 1 ;
- Un bloc 36 de correction d'offset de phase entre l'oscillateur local et la porteuse ;
- Un bloc 37 dit de « demapping » extrayant de la constellation des symboles souples à destination de l'unité 1.

L'unité 3 de démodulation du signal filtré (c'est-à-dire des symboles bruts sb entachés de bruit) permet :
- d'extraire de ce signal filtré des symboles d'informations sb', un symbole sb' pouvant être associé à l'ensemble des éléments d'un alphabet B (transmis par l'émetteur) avec des probabilités associées, l'ensemble ou un sous ensemble de ces probabilités constituant un symbole souple. Pour ce faire le filtre adapté maximisant le rapport signal sur bruit peut être implémenté afin de maximiser le rapport signal sur bruit en entrée du calcul d'annulation de l'interférence de polarisation croisée (annulation de l'interférence sachant le filtre adapté) ;
- d'extraire de ce signal une information d'erreur fréquentielle porteuse et de rythme symbole à destination de l'unité 1 de réception ;
- d'égaliser les défauts de canal, déséquilibre I/Q de modulation, interférence inter-symbole, multi-trajets, et de renvoyer le signal en entrée de l'unité 2 d'annulation de la polarisation secondaire afin de maximiser le rapport signal sur distorsion en entrée de l'unité d'annulation de la polarisation secondaire.

### Unité 4 de décodage

L'unité 4 de décodage canal traite les symboles s'b, dits souples (issus de l'unité 3 de démodulation) en fonction du codage de canal qui a été utilisé (turbo codage, LDPC, viterbi, Reed-Solomon, etc.) et corrige les éventuelles erreurs de démodulation de l'unité 3 de démodulation du signal filtré en aval.

L'unité 4 de décodage peut en outre également fournir une information probabiliste dite extrinsèque à l'unité 22 d'estimation du filtre, en amont, en vue du calcul de ce filtre.

En d'autres termes, l'unité 4 de décodage fournit une suite de mots binaires b correspondant aux symboles émis les plus probables.

On décrit plusieurs configurations de mise en œuvre du récepteur ci-dessus décrit.

La figure la illustre un récepteur où l'unité 2 d'annulation de l'interférence fonctionne en mode aveugle sans nécessité d'une unité 3 de démodulation. Selon ce premier mode de réalisation, les filtres à un instant donné sont estimés à partir du signal filtré en sortie de l'unité 2) de filtrage à l'instant précédent.

La figure 1b illustre un récepteur où l'unité 2 d'annulation de l'interférence prend sur son entrée un signal issu de l'unité 3 de démodulation ou un signal issu de l'unité 4 de décodage.

Selon un second mode de réalisation, l'unité 2 d'annulation de la polarisation secondaire prend sur son entrée un signal issu de l'unité 3 de démodulation afin de calculer son signal d'erreur pour mettre à jour son filtre en maximisant le rapport signal à bruit et/ou son rapport signal sur distorsion canal. Dans ce second mode de réalisation, ce sont les symboles filtrés par le filtre adapté de l'unité 3 de démodulation qui sont utilisés pour estimer les filtres de l'unité 22 d'estimation du filtre.

Selon un troisième mode de réalisation, les filtres de l'unité 22 d'estimation du filtre sont estimés à partir des symboles d'informations affectés d'une probabilité (symboles sb').

Sur la figure 1b l'interrupteur ramenant les symboles est positionné sur l'unité 4 de décodage ou sur l'unité 3 de démodulation. Quand il est sur l'unité 3 de démodulation cela correspond au deuxième ou troisième mode de réalisation selon que l'on se met après le filtre adapté ou après égalisation et demapping symbole souple.

S'agissant des second et troisième modes de réalisation, on dit que le récepteur est en mode non aveugle , soit « assisté par des données » (en anglais « *Data Aided* ») soit à minima la constellation du signal est connue afin qu'il se synchronise correctement au niveau de l'unité 1 de réception, et que le filtre soit correctement estimé. Dans un tel cas, le signal reçu comprend des symboles attendus qui peuvent permettre de récupérer les informations de rythme ou de fréquence fournie à l'unité 1 de réception. Ces symboles pourront être utilisés dans le deuxième mode de réalisation. Ainsi, pour ces modes de réalisation relatifs à l'unité 22 d'estimation, on mesure la distance et/ou la vraisemblance entre une séquence de symboles et son profil attendu : il peut s'agir de mots uniques (détection simple par corrélation), sinon de symboles détectés dans une constellation (dispersion minimale en amplitude et phase par critère LMS (en anglais « *Least Mean Square* »), ou RLS (en anglais, « *Recursive Least Square* », sinon en amplitude seule par critère de type CMA).

Selon un quatrième mode de réalisation, les filtres sont estimés à partir des symboles d'informations b extrinsèques en sortie de l'unité 4 de décodage.

S'agissant du quatrième mode de réalisation, l'estimation du filtre se fait par des méthodes dites itératives consistant à minimiser la probabilité d'erreur représentée par les informations extrinsèques de l'unité 4 , l'algorithme BCJR pourra par exemple être utilisé, ou *backward-forward.*

En outre, les coefficients des filtres sont régulièrement corrigés par une méthode de gradient, Newton ou autre convergeant vers la solution optimale.

Selon un cinquième mode de réalisation, illustré sur la figure 1c, le récepteur est similaire mais les filtres de l'unité 2 d'annulation de la polarisation secondaire sont estimés à partir des signaux synchronisés par l'unité 1 et filtrés par les filtres d'intérêt de l'unité 3 dupliqués dans l'unité 22 d'estimation du filtre sur chacune des entrées, conformément à la figure 1b. Ce cinquième mode est mathématiquement équivalent aux second, troisième et quatrième modes de réalisations en ce que les opérations de filtrage sont commutatives, mais permet dès lors que la fluctuation de l'interférence de polarisation est lente de réaliser les calculs sur des blocs non contigus d'échantillons en vue d'augmenter les cadences de traitement. On note que cette structure, mathématiquement équivalente puisque les filtres commutent les uns avec les autres, permet une implémentation plus aisée pour une égalisation à très haut débit, en mode bloc par exemple.

Ces cinq modes, peuvent être indépendamment combinés avec l'option de filtrage des composantes du signal synchronisé décrite plus haut.

## Revendications

1. Récepteur de communication radio recevant un signal radio (S) comprenant une polarisation principale (MAIN-POL) et une polarisation secondaire (X-POL) orthogonale à la polarisation principale (MAIN-POL), le récepteur comprenant :
- une unité (1) de réception de la polarisation principale (MAIN-POL) et de la polarisation secondaire (X-POL) du signal reçu, synchronisées en fréquence porteuse sur la polarisation principale (MAIN-POL);
- une unité (2) d'annulation de la polarisation secondaire synchronisée sur la polarisation principale (MAIN-POL) et configurée pour supprimer, du signal reçu (S), l'interférence due à la polarisation secondaire (X-POL), l'unité (2) d'annulation de la polarisation secondaire comprenant une unité (21) de filtrage recevant en entrée la polarisation principale (MAIN-POL) et la polarisation secondaire (X-POL) afin de :
- filtrer les composantes en phase de la polarisation secondaire contribuant à l'interférence de la polarisation principale, pour ses composantes en phase et en quadrature ;
- filtrer les composantes en quadrature de la polarisation secondaire contribuant à l'interférence de la polarisation principale, pour ses composantes en phase et quadrature ;
- additionner les composantes ainsi filtrées aux composantes en phase et en quadrature de la polarisation principale de manière à ce que le signal filtré issu de l'unité (21) de filtrage efface la contribution de la polarisation secondaire sur la polarisation principale, le signal filtré issu de l'unité (21) de filtrage comprenant uniquement la contribution de la polarisation principale ;
- une unité (3) de démodulation du signal filtré, ledit signal filtré comprenant uniquement la contribution de la polarisation principale, ladite unité (3) de démodulation étant située en aval de l'unité (2) d'annulation et étant configurée pour, à partir du signal reçu dont on a supprimé l'interférence due à la polarisation secondaire (X-POL) :
calculer une information d'erreur fréquentielle porteuse;
calculer une information de décalage du rythme symbole ;
l'unité (3) de démodulation étant outre configurée pour communiquer par rétroaction à l'unité (1) de réception de la polarisation principale (MAIN-POL) et de la polarisation secondaire du signal reçu, ladite information d'erreur fréquentielle porteuse et ladite information de décalage du rythme symbole de manière à ce que la polarisation principale (MAIN-POL) et la polarisation secondaire (X-POL) soient synchronisées en fréquence et en rythme sur le signal reçu dont on a supprimé l'interférence due à la polarisation secondaire (X-POL).

2. Récepteur selon la revendication 1, dans laquelle les composantes en phase et quadrature en entrée et en sortie de l'unité d'annulation (2) forment une enveloppe complexe, l'unité (21) de filtrage étant constituée par un filtre complexe unique, c'est-à-dire que :
- le filtre dont l'entrée est en phase et la sortie est en phase est identique au filtre dont l'entrée est en quadrature et la sortie en quadrature ;
- le filtre dont l'entrée est en phase et la sortie en quadrature est opposé au filtre dont l'entrée est en quadrature et la sortie en phase.

3. Récepteur selon la revendication 1, dans lequel l'unité (3) de démodulation comprend un filtre adapté qui optimise le rapport signal à bruit pour démoduler les symboles et dont la sortie est appliquée à l'entrée d'une unité d'estimation (22) d'un filtre de l'unité (2) d'annulation de la polarisation secondaire afin d'estimer les filtres de l'unité (21) de filtrage du signal reçu.

4. Récepteur selon la revendication 1 dans lequel le filtre adapté de l'unité (3) de démodulation est dupliqué dans l'unité d'estimation (22) sur les entrées de l'unité (21) de filtrage afin d'en estimer les filtres.

5. Récepteur selon la revendication 3, dans lequel l'unité (3) de démodulation est en outre configurée pour égaliser simultanément des défauts de canal et dont la sortie est appliquée à l'entrée de l'unité d'estimation (22) afin d'estimer les filtres de l'unité de filtrage (21).

6. Récepteur selon la revendication 5, dans lequel le filtre d'égalisation secondaire (33) de l'unité (3) de démodulation, dit de canal, est dupliqué dans l'unité d'estimation (22) afin d'estimer les filtres de l'unité de filtrage (21).

7. Récepteur selon l'une des revendications 3 ou 5, dans lequel l'unité (3) de démodulation du signal filtré est configurée pour extraire du signal filtré des symboles souples envoyés à l'unité d'estimation (22).

8. Récepteur selon l'une des revendications 3 ou 5 ou 7, comprenant en outre une unité (4) de décodage configurée pour décoder les symboles souples fournis par l'unités de démodulation (3) et dont les symboles décodés et les informations extrinsèques sont envoyés à l'unité d'estimation (22).

9. Récepteur selon l'une des revendications 3 à 8, dans lequel, à un instant donné, les filtres de l'unité d'annulation (21) sont estimés à partir du signal filtré à l'instant précédent.

## Patentansprüche

1. Funkkommunikationsempfänger, der ein Funksignal (S) empfängt, das eine Hauptpolarisation (MAIN-POL) und eine Sekundärpolarisation (X-POL) orthogonal zu der Hauptpolarisation (MAIN-POL) umfasst, wobei der Empfänger Folgendes umfasst:
- eine Empfangseinheit (1) der Hauptpolarisation (MAIN-POL) und der Sekundärpolarisation (X-POL) des empfangenen Signals, die hinsichtlich der Trägerfrequenz mit der Hauptpolarisation (MAIN-POL) synchronisiert sind;
- eine Annullierungseinheit (2) der Sekundärpolarisation, die mit der Hauptpolarisation (MAIN-POL) synchronisiert ist, und konfiguriert, um aus dem empfangenen Signal (S) die Interferenz aufgrund der Sekundärpolarisation (X-POL) zu entfernen, wobei die Annullierungseinheit (2) der Sekundärpolarisation eine Filterungseinheit (21) umfasst, die am Eingang die Hauptpolarisation (MAIN-POL) und die Sekundärpolarisation (X-POL) empfängt, um:
- die In-Phasen-Komponenten der Sekundärpolarisation, die zu der Interferenz der Hauptpolarisation beitragen, für ihre In-Phasen- und Quadraturkomponenten zu filtern;
- die Quadraturkomponenten der Sekundärpolarisation, die zu der Interferenz der Hauptpolarisation beitragen, für ihre In-Phasen- und Quadraturkomponenten zu filtern;
- die so gefilterten Komponenten zu den In-Phasen- und Quadraturkomponenten der Hauptpolarisation hinzuzuzählen, sodass das gefilterte Signal, das aus der Filterungseinheit (21) stammt, den Beitrag der Sekundärpolarisation zu der Hauptpolarisation löscht, wobei das gefilterte Signal, das aus der Filterungseinheit (21) stammt, nur den Beitrag der Hauptpolarisation umfasst;
- eine Demodulationseinheit (3) des gefilterten Signals, wobei das gefilterte Signal nur den Beitrag der Hauptpolarisation umfasst, wobei die Demodulationseinheit (3), die sich stromabwärts der Annullierungseinheit (2) befindet, konfiguriert ist, um ausgehend von dem empfangenen Signal, dessen Interferenz aufgrund der Sekundärpolarisation (X-POL) entfernt worden ist:
eine Trägerfrequenz-Fehlerinformation zu berechnen;
eine Information über eine Symboltaktverschiebung zu berechnen;
wobei die Demodulationseinheit (3) weiter konfiguriert ist, um der Empfangseinheit (1) der Hauptpolarisation (MAIN-POL) und der Sekundärpolarisation des empfangenen Signals per Rückmeldung die Trägerfrequenz-Fehlerinformation und die Information über eine Symboltaktverschiebung zu kommunizieren, sodass die Hauptpolarisation (MAIN-POL) und die Sekundärpolarisation (X-POL) in Bezug auf die Frequenz und den Rhythmus mit dem empfangenen Signal synchronisiert sind, dessen Interferenz aufgrund der Sekundärpolarisation (X-POL) entfernt worden ist.

2. Empfänger nach Anspruch 1, wobei die In-Phasen- und Quadraturkomponenten am Eingang und am Ausgang der Annullierungseinheit (2) eine komplexe Einhüllende bilden, wobei die Filterungseinheit (21) aus einem einzigen komplexen Filter besteht, was bedeutet, dass:
- der Filter, dessen Eingang in-Phase ist und dessen Ausgang in-Phase ist, gleich dem Filter ist, dessen Eingang in Quadratur ist und dessen Ausgang in Quadratur ist;
- der Filter, dessen Eingang in-Phase ist und dessen Ausgang in Quadratur ist, entgegengesetzt zu dem Filter ist, dessen Eingang in Quadratur ist und der Ausgang in-Phase ist.

3. Empfänger nach Anspruch 1, wobei die Demodulationseinheit (3) ein angepasstes Filter umfasst, welches das Signal-Rausch-Verhältnis zum Demodulieren der Symbole optimiert, und dessen Ausgang auf den Eingang einer Schätzungseinheit (22) eines Filters der Annullierungseinheit (2) der Sekundärpolarisation angewendet wird, um die Filter der Filterungseinheit (21) des empfangenen Signals zu schätzen.

4. Empfänger nach Anspruch 1, wobei das angepasste Filter der Demodulationseinheit (3) in der Schätzungseinheit (22) auf die Eingänge der Filterungseinheit (21) dupliziert wird, um deren Filter zu schätzen.

5. Empfänger nach Anspruch 3, wobei die Demodulationseinheit (3) weiter konfiguriert ist, um gleichzeitig Kanalfehler zu egalisieren, und deren Ausgang auf den Eingang der Schätzungseinheit (22) angewendet wird, um die Filter der Filterungseinheit (21) zu schätzen.

6. Empfänger nach Anspruch 5, wobei der Sekundäregalisierungsfilter (33) der Demodulationseinheit (3), Kanalfilter genannt, in der Schätzungseinheit (22) dupliziert wird, um die Filter der Filterungseinheit (21) zu schätzen.

7. Empfänger nach einem der Ansprüche 3 oder 5, wobei die Demodulationseinheit (3) des gefilterten Signals konfiguriert ist, um aus dem gefilterten Signal Weichsymbole zu extrahieren, die zu der Schätzungseinheit (22) gesendet werden.

8. Empfänger nach einem der Ansprüche 3 oder 5 oder 7, weiter eine Decodierungseinheit (4) umfassend, die konfiguriert ist, um die Weichsymbole, die von den Demodulationseinheiten (3) bereitgestellt werden, zu decodieren, und deren decodierte Symbole und die extrinsischen Informationen zu der Schätzungseinheit (22) gesendet werden.

9. Empfänger nach einem der Ansprüche 3 bis 8, wobei die Filter der Filterungseinheit (21) zu einem gegebenen Zeitpunkt ausgehend von dem zum vorstehenden Zeitpunkt gefilterten Signal geschätzt werden.

## Claims

1. A radio communications receiver receiving a signal radio (S) comprising a main polarisation (MAIN-POL) and a secondary polarisation (X-POL) orthogonal to the main polarisation (MAIN-POL), the receiver comprising:
- a receiving unit (1) of the main polarisation (MAIN-POL) and of the secondary polarisation (X-POL) of the received signal, synchronized as carrier frequency on the main polarisation (MAIN-POL);
- a cancellation unit (2) of the secondary polarisation synchronized on the main polarisation (MAIN-POL) and configured to cancel, from the received signal (S), interference due to the secondary polarisation (X-POL), the cancellation unit (2) of the secondary polarisation comprising a filtering unit (21) receiving at input the main polarisation (MAIN-POL) and the secondary polarisation (X-POL) to:
- filter the components in phase of the secondary polarisation contributing to interference of the main polarisation, for its components in phase and in quadrature;
- filter the components in quadrature of the secondary polarisation contributing to interference of the main polarisation, for its components in phase and quadrature;
- add the components filtered in this way to the components in phase and in quadrature of the main polarisation such that the filtered signal coming from the filtering unit (21) deletes the contribution of the secondary polarisation on the main polarisation, the filtered signal coming from the filtering unit (21) comprising only the contribution of the main polarisation;
- a demodulation unit (3) of the filtered signal, said filtered signal comprising only the contribution of the main polarisation, said demodulation unit (3) being located downstream of the cancellation unit (2) and being configured to, from the received signal whereof the interference due to the secondary polarisation (X-POL) was cancelled:
calculate carrier frequency error information;
calculate offset information of the rhythm symbol;
the demodulation unit (3) being further configured to communicate by retroaction to the receiving unit (1) of the main polarisation (MAIN-POL) and of the secondary polarisation of the received signal, said carrier frequency error information and said offset information of the rhythm symbol so that the main polarization (MAIN-POL) and the secondary polarization (X-POL) are synchronized as frequency and as rhythm on the received signal whereof the interference due to the secondary polarization (X-POL) was cancelled.

2. The receiver according to claim 1, wherein the components in phase and quadrature in input and in output of the cancellation unit (2) form a complex envelope, the filtering unit (21) being constituted by a single complex filter, that is:
- the filter whereof the input is in phase and the output is in phase is identical to the filter whereof the input is in quadrature and the output in quadrature;
- the filter whereof the input is in phase and the output in quadrature is opposite the filter whereof the input is in quadrature and the output in phase.

3. The receiver according to claim 1, wherein the demodulation unit (3) comprises an adapted filter which optimise the signal-to-noise ratio to demodulate the symbols and whereof the output is applied to the input of an estimation unit (22) of a filter of the cancellation unit (2) of the secondary polarisation to estimate the filters of the filtering unit (21) of the received signal.

4. The receiver according to claim 1, wherein the adapted filter of the demodulation unit (3) is duplicated in the estimation unit (22) on the inputs of the filtering unit (21) to estimate its filters.

5. The receiver according to claim 3, wherein the demodulation unit (3) is also configured to simultaneously equalize channel defects and whereof the output is applied to the input of the estimation unit (22) to estimate the filters of the filtering unit (21).

6. The receiver according to claim 5, wherein the secondary equalization filter (33) of the demodulation unit (3), so-called channel, is duplicated in the estimation unit (22) to estimate the filters of the filtering unit (21).

7. The receiver according to any one of claims 3 or 5, wherein the demodulation unit (3) of the filtered signal is configured to extract of the filtered signal of the supple symbols sent to the estimation unit (22).

8. The receiver according to any one of claims 3 or 5 or 7, also comprising a decoding unit (4) configured to decode the supple symbols provided by the demodulation units (3) and whereof the decoded symbols and the extrinsic information are sent to the estimation unit (22).

9. The receiver according to any one of claims 3 to 8, wherein, at any given time, the filters of the cancellation unit (21) are estimated from the filtered signal the preceding instant.
